# EUROPEAN PATENT APPLICATION

(11) **EP 4 756 956 A2**
(43) Date of publication of application: **10.06.2026**
(21) Application number: 26173571.6
(22) Date of filing: 26.11.2021
(51) Int. Cl.: H01M 10/04

(54) **ELECTRODE ASSEMBLY AND MANUFACTURING METHOD AND APPARATUS, BATTERY CELL, BATTERY AND ELECTRIC DEVICE**

(62) Divisional of application: 21965175.9
(71) Applicant: CONTEMPORARY AMPEREX TECHNOLOGY (HONG KONG) LIMITED, Hong Kong (HK)
(72) Inventor: XU, Hu, Ningde, Fujian, 352100 (CN)
(74) Representative: Lorenz Seidler Gossel Part. mbB

(57) **Abstract**

The embodiments of this disclosure provide an electrode assembly and manufacturing method and device, battery cell, battery, electric device, the electrode assembly is used for a battery cell (100) and includes: a first electrode sheet (1) and a second electrode sheet (2) of opposite polarities, wherein the first electrode sheet (1) and the second electrode sheet (2) both include a main body (11) and at least one tab group (12), the first electrode sheet (1) and the second electrode sheet (2) are winded around a winding axis (K) such that their respective main bodies (11) overlap to form a winding body (S), and after the main bodies (11) have been winded a plurality of electrode sheet layers (111) are formed along a radial direction of the winding main body (S); wherein, the tab group (12) includes a plurality of stacked tabs (12') which protrude from the main body (11), and at least two adjacent tabs (12') in the tab group (12) are separated by at least one electrode sheet layer (111) of same polarity in the radial direction.

## Description

### TECHNICAL FIELD

The present invention relates to the field of battery technology, and more particularly, relates to an electrode assembly and manufacturing method and device, battery cell, battery, electric device.

### BACKGROUND

Because of their advantages of high energy density, high power density, large cycle counts, long storage time, and etc., lithium-ion batteries and the like have been widely used in electric vehicles.

However, it is always a difficult problem in the industry to improve the working performance of batteries in electric vehicles.

### SUMMARY

The purpose of this invention is to improve battery performance.

According to a first aspect of this invention, an electrode assembly is provided, which is used for a battery cell and includes:
a first electrode sheet and a second electrode sheet of opposite polarities, wherein the first electrode sheet and the second electrode sheet both include a main body and at least one tab group, the first electrode sheet and the second electrode sheet are winded around a winding axis such that their respective main bodies overlap to form a winding body, and after the main bodies have been winded a plurality of electrode sheet layers are formed along a radial direction of the winding main body;
wherein, the tab group includes a plurality of stacked tabs which protrude from the main body, and at least two adjacent tabs in the tab group are separated by at least one electrode sheet layer of same polarity in the radial direction.

The embodiments reduce the number of the tabs extracted from one same electrode sheet of the electrode assembly, reduce the difficulty in die-cutting the tabs, and may also improve the alignment of the plurality of tabs in the tab group after winding, facilitate controlling the misalignment in a small range, thus increase the effective connection between the tab group and the electrode terminal. Moreover, this structure may allow arranging relatively sparse tabs at the winded inner circles, so as to reduce the difficulty in die-cutting the tabs, improve the size and position accuracy of the tabs. In addition, this extraction manner of the tabs may reduce the weight of the electrode assembly, thereby reduce the weight of the battery cell. All of the above advantages may improve the performance of the battery cell.

In some embodiments, every two adjacent tabs in the tab group are spaced along a winding direction.

The arrangement of the tabs in the embodiments allows the tab group to extend along only part of the circumference of the winding structure after winding, so as to allow the tab groups of the first electrode sheet and of the second electrode sheet to be spaced along the circumference of the winding structure, which may not only separate the different tab groups spatially, but also enable the electrolyte to infiltrate into the inner of the winding body through the space regions, such that the electrolyte may fully react with the active materials on the first electrode sheet and on the second electrode sheet during charging and discharging of the battery.

In some embodiments, the numbers of the electrode sheet layers between every two adjacent tabs in the tab group gradually decrease from inside to outside.

The embodiments have taken into account the gradual decrease of the winding circumference of the electrode sheet from an outer layer to an inner layer. The spacing between two adjacent tabs near the inner layer is relatively small and the tabs are dense. In case where each electrode sheet layer 111 has a tab extracted, the spacing between two adjacent tabs is small and the tab group has excess overcurrent capacity at a radial inner region, which causes greater difficulty in die-cutting the tabs. It is difficult to ensure the precision of die-cutting the tabs, and it is difficult to control the misalignment of the plurality of tabs in the tab group.

In some embodiments, the numbers of the electrode sheet layers between every two adjacent tabs in the tab group are equal.

The embodiments allow the plurality of tabs in the tab group to be evenly distributed in the radial direction, so as to make it easier to extract electric energy provided by the plurality of tabs in the tab group. For example, if the tab group is electrically connected to the electrode terminal through an adaptor by welding, it is easier to control the welding paths of the adaptor and the tab group, and ensure the electric connection effect of the tab group and the adaptor, improving the operational reliability of the battery cell.

In some embodiments, one tab group is provided, and spacings between every two adjacent tabs in the tab group are equal along a winding direction.

On the basis of allowing the plurality of tabs of the tab group to be stacked, the embodiments may reduce the number of tabs while reducing the difficulty in die-cutting by designing to keep the adjacent tabs in the tab group to be equally spaced. The die-cutting may be performed by only using cutters of same size, improving the production efficiency of the electrode assembly.

In some embodiment, widths of the plurality of tabs in the tab group gradually increase in a winding direction from inside to outside, such that the tab group is in a shape of a fan.

The embodiments allow the widths of the plurality of tabs in the tab group to gradually increase along the radial direction from inside to outside. On the basis that every two adjacent tabs are equally spaced, the embodiments may increase the effective contact area of the tab group with the electrode terminal when connected to the electrode terminal by increasing the widths of the tabs along the winding direction in a region of the outer layer, and may increase the overcurrent capacity, and thereby improve the performance of the battery cell.

In some embodiments, widths of the plurality of tabs in the tab group are equal in a winding direction.

The embodiments allow the widths of the plurality of tabs in the tab group to be equal, which may reduce the difficulty in die-cutting the tabs, facilitate ensuring the size of the tabs, facilitate ensuring the alignment of the plurality of tabs during winding, so as to reduce the technological difficulty in preparing the electrode assembly.

In some embodiments, the respective tab groups of the first electrode sheet and of the second electrode sheet are extracted from a same end of the winding body along the winding axis.

The embodiments have the respective tab groups of the first electrode sheet and of the second electrode sheet extracted from one same end of the winding body. Space only needs to be reserved at one end of the electrode assembly for electrical connection, and there is no need to provide the respective electrode terminals at both ends of the battery cell, which may effectively improve the overall energy density of the battery cell. Under the condition that the capacity of the battery cell is certain, this may reduce the volume of the battery cell, so that the battery may be more easily arranged in an electric device.

In some embodiments, the respective tab groups of the first electrode sheet and of the second electrode sheet are symmetrically arranged with respect to the winding axis.

The embodiments allow the first electrode sheet and the second electrode sheet to have same overcurrent capacity, and facilitate increasing the circumferential size of the tab group, which may improve the overcurrent capacity of the battery cell, and improve the spatial separation between the tab groups of the first electrode sheet and of the second electrode sheet to avoid short circuit.

According to a second aspect of this invention, a battery cell is provided, which includes:
a housing having an opening;
an end cover assembly for closing the opening, wherein the end cover assembly includes an end cover body and a first electrode terminal, the end cover body is for covering the opening, and the first electrode terminal is provided at the end cover body; and
the electrode assembly of the above embodiments, provided inside the housing, wherein the at least one tab group of the first electrode sheet is electrically connected with the first electrode terminal, and the at least one tab group of the second electrode sheet is electrically connected with the end cover body or to a second electrode terminal provided on the end cover body.

In some embodiments, the battery cell further includes two adaptors, wherein the at least one tab group of the first electrode sheet is electrically connected with the first electrode terminal through one of the adaptors, and the at least one tab group of the second electrode sheet is electrically connected with the end cover body or with the second electrode terminal through other of the adaptors.

Considering that the plurality of tabs in the tab group are loose, and it is difficult to connect them directly to the electrode terminal, the embodiments realize an electrical connection between the tab group and the electrode terminal through the adaptors, which may improve the connection reliability between the tab group and the electrode terminal, and may facilitate a reliably transmission of the electric energy output by the tabs to the electrode terminal, and reduce the difficulty in the connection process.

In some embodiments, the end cover assembly further includes an insulator, the insulator includes an insulator body and a first projector, the insulator body is arranged between the end cover body and the electrode assembly, the first projector is connected to the insulator body and protrudes towards the electrode assembly, one of the adaptors and at least one tab group connected thereto are located at one side of the first projector, and other of the adaptors and at least one tab group connected thereto are located at other side of the first projector.

For the structure where the tab groups of the first electrode sheet and of the second electrode sheet are extracted from same end of the winding body S, the embodiments may physically isolate the tab groups of opposite polarities through the first projector, so as to avoid short circuit resulted from vibration during assembling or in use, and to ensure insulation between the tab groups of the first electrode sheet and of the second electrode sheet and improve the operation reliability of the battery cell.

In some embodiments, free ends of the plurality of tabs in each of the tab groups are drawn together and connected to the adaptors.

The connection between the tab group and the adaptor in the embodiments may omit a process of flattening the tabs by directly connecting the plurality of tabs together to be connected with the adaptor, which may simplify the assembly of the battery cell, and reduce the requirement on the positioning accuracy of the ends of the tabs when connecting the tab group and the adaptor, thus improving the production efficiency of the battery cell.

In some embodiments, free ends of the plurality of tabs in each of the tab groups are flattened to form connecting portions, and the respective connecting portions of the plurality of tabs are connected to the adaptors.

The embodiments form the connecting portions by flattening the free ends of the plurality of tabs in the tab group and connecting them to the adaptor through the plurality of connecting portions, thus increasing the radial length of the adaptor electrically connected with the tab group. When the connection is realized by welding, it is easy to make the welding paths cover all the tabs in the tab group, thus improving the reliability of welding and improving the performance of battery cell.

According to a third aspect of this invention, a battery is provided, which includes the battery cell of the above embodiment, and a case for accommodating the battery cell.

According to a fourth aspect of this invention, an electronic device is provided, which includes the battery of the above embodiments, wherein the battery is for supplying electrical energy for the electronic device.

According to a fifth aspect of this invention, a manufacturing method of electrode assembly is provided, which includes:
an electrode sheets providing step, including: providing a first electrode sheet and a second electrode sheet of opposite polarities, wherein both the first electrode sheet and the second electrode sheet include a main body and at least one tab group; and
an electrode sheets winding step, including: winding the first electrode sheet and the second electrode sheet around a winding axis, such that their respective main bodies overlap to form a winding body, and after the main bodies have been winded, a plurality of electrode sheet layers are formed along a radial direction of the winding body, the tab group includes a plurality of stacked tabs, which protrude from the main body, and at least two adjacent tabs in the tab group are separated by at least one electrode sheet layer of same polarity in the radial direction.

According to a sixth aspect of this invention, a manufacturing device of electrode assembly is provided, which includes:
an electrode sheets providing apparatus configured to provide a first electrode sheet and a second electrode sheet of opposite polarities, wherein both the first electrode sheet and the second electrode sheet include a main body and at least one tab group; and
an electrode sheets winding apparatus configured to wind the first electrode sheet and the second electrode sheet around a winding axis, such that their respective main bodies overlap to form a winding body, and after the main bodies have been winded, a plurality of electrode sheet layers are formed along a radial direction of the winding body, the tab group includes a plurality of stacked tabs, which protrude from the main body, and at least two adjacent tabs in the tab group are separated by at least one electrode sheet layer of same polarity in the radial direction.

### BRIEF DESCRIPTION OF THE DRAWINGS

In order to more clearly illustrate the technical solutions of the embodiments of this disclosure, the accompanying drawings to be used in the embodiments of this disclosure will be briefly described below. Obviously, the accompanying drawings described below are only some embodiments of this disclosure. For those skilled in the art, it is possible to obtain other accompanying drawings according to the accompanying drawings without any creative labor.
FIG. 1 is a schematic structural diagram of some embodiments of this disclosure in which a battery is installed in a vehicle.
FIG. 2 is an exploded view of some embodiments of a battery of this disclosure.
FIG. 3 is a schematic structural diagram of some embodiments of a battery cell of this disclosure.
FIG. 4 is a sectional view showing a longitudinal section of some embodiments of the battery cell of this disclosure.
FIG. 5 is a sectional view showing a longitudinal section of an electrode assembly in FIG. 4.
FIG. 6 is a schematic structural diagram of an end of the electrode assembly shown in FIG. 5.
FIG. 7A and FIG. 7B are schematic diagrams of a tab group with a fan structure and with an equal-width structure respectively.
FIG. 8 is a schematic structural diagram of an adaptor in FIG. 4.
FIG. 9 is a sectional view showing a longitudinal section of some other embodiments of the battery cell of this disclosure.
FIG. 10 is a schematic structural diagram of an end of an electrode assembly in FIG. 9.
FIG. 11 is a schematic flow chart of some embodiments of a manufacturing method of electrode assembly of this disclosure.
FIG. 12 is a schematic diagram of the module composition of some embodiments of a manufacturing device of electrode assembly of this disclosure.

In the accompanying drawings, the drawings are not drawn to actual scale.

### Reference numbers:

10, electrode assembly; 1, first electrode sheet; 11, main body; 111. electrode sheet layer; 12, tab group; 12', tab; 121, connecting portion; 2. second electrode sheet; 3, separator;
100, battery cell; 101, housing; 1011, opening; 102, end cover assembly; 1021, end cover body; 1022, first electrode terminal; 1022', second electrode terminal; 1023, insulator; 1023A, insulator body; 1023B, first projector; 1023C, second projector; 103. adaptor; 1031, first section; 1032, second section; 1033, third section; 1033', connecting hole; 1034, extension section;
200, battery; 201, case; 201A, accommodation portion; 201B, first cover body; 201C, second cover body;
300, vehicle; 301, vehicle axle; 302, wheel; 303, motor; 304, controller;
400, manufacturing device; 410, electrode sheets providing apparatus; 420, electrode sheets winding apparatus;
S, winding body; K, winding axis.

### DETAILED DESCRIPTION OF THE EMBODIMENTS

The implementations of this disclosure are described in further detail with respect to the accompanying drawings and the embodiments. The detailed description and drawings of the following embodiments are used to illustrate, by example, the rationale of this disclosure, but are not used to limit the scope of this disclosure, i.e. this disclosure is not limited to the embodiments described.

It should be noted that, in the description of this disclosure, unless otherwise specified, "multiple" means more than two; the orientation or positional relationship indicated by the terms "up", "down", "left", "right", "inner", "outer", and etc. are only for the purpose of facilitating the description of this disclosure and simplifying the description, and do not indicate or imply that the device or element referred to must have a particular orientation, be constructed and operated in a particular orientation and therefore cannot be construed as a limitation of this disclosure.

In addition, the terms "first", "second", "third", and etc. are used for description only and cannot be construed as indicating or suggesting relative importance. "Vertical" is not strictly vertical, but is within the margin of error allowed. "Parallel" is not strictly parallel, but within the margin of error allowed. The location words in the following description refer to the directions shown in the figures and do not limit the specific structure of this disclosure.

It should also be noted that, in the description of this disclosure, unless otherwise expressly specified and defined, the terms "installation", "connection" and "coupling" should be construed broadly, for example, they may be fixed connection, may be detachable connection, or integrated connections; they may be direct connection or indirect connection through an intermediate medium. For those skilled in the art, the specific meaning of the above terms in this disclosure should be construed on a case-by-case basis.

The referred "embodiments" herein imply that specific features, structures or characteristics described in conjunction with the embodiments may be included in at least some of the embodiments of this disclosure. The presence of the phrase at various locations in the specification does not necessarily refer to the same embodiment, nor is it a separate or alternative embodiment that is mutually exclusive with other embodiments. It is understood, both explicitly and implicitly, by those skilled in the art that the embodiments described herein may be combined with other embodiments.

In the description of the embodiments of this disclosure, the term "a plurality of" means more than two (including two), similarly, "a plurality of sets" means more than two (including two) sets, and "a plurality of pieces" means more than two (including two) pieces.

This disclosure uses descriptions of orientations or positional relationships indicated by "up", "down", "top", "bottom", "front", "back", "inner" and outer", which are only for the purpose of facilitating the description of this disclosure and not to indicate or imply that the device referred to must have a particular orientation, be constructed and operated in a particular orientation and therefore cannot be construed as limitation to the scope of protection of this disclosure.

Battery cells may include a lithium-ion secondary battery, a lithium-ion primary battery, a lithium-sulfur battery, a sodium-lithium-ion battery, a sodium-ion battery, or a magnesium-ion battery, etc., to which the embodiments of this disclosure constitute no limitation. Battery cells may be cylindrical, flat, rectangular or in other shapes, to which the embodiments of this disclosure constitute no limitation. Battery cells are generally grouped into three types according to their packaging: cylindrical battery cell, prismatic battery cell and pouch battery cell, to which the embodiments of this disclosure constitute not limitation as well.

An existing battery cell generally includes a housing and an electrode assembly contained within the housing, and has the housing filled with electrolyte. The electrode assembly is formed mainly by stacking or winding a first electrode sheet and a second electrode sheet of opposite polarities, and usually has a separator provided between the first and second electrode sheets. The portions of the first and second electrode sheets coated with active materials form the main body of the electrode assembly, while the uncoated portions of the first and second electrode sheets form a first tab and a second tab respectively. In a lithium-ion battery, the first electrode sheet may be an anode electrode plate, which includes an anode current collector and anode active material layers arranged on both sides of the anode current collector. The material of the anode current collector may be, for example aluminum, and the anode active materials may be, for example lithium cobalt oxide, lithium iron phosphate, ternary lithium or lithium manganate oxide, etc. The second electrode sheet may be a cathode electrode sheet, which includes a cathode current collector and cathode active material layers arranged on both sides of the cathode current collector. The material of the cathode current collector may be, for example copper, and the cathode active materials may be, for example graphite or silicon, etc. The first tab and the second tab may be both located at one end of the main body, or respectively located at two ends of the main body. During charging and discharging of a battery cell, the anode active materials and the cathode active materials react with the electrolyte, and the tabs are connected to the terminals to form a current loop.

An existing battery cell is generally provided with a first electrode terminal and a second electrode terminal of opposite polarities. Both the first electrode sheet and the second electrode sheet have a structure whose tabs are formed by die-cutting. After the first electrode sheet and the second electrode sheet have been winded, a first tab is extracted from each layer of the first electrode sheet, and all the first tabs are stacked and electrically connected to the first electrode terminal. A second tab is extracted from each layer of the second electrode sheet, and all the second tab are stacked and electrically connected to the second electrode terminal.

However, the inventor has found in practice that a large number of tabs should be extracted from a same electrode sheet in this kind of electrode assembly, which has the following problems: firstly, the difficulty of the process of die-cutting tabs is increased, in that the multiple stacked tabs formed after winding may be greatly misaligned, and due to the precision of die-cutting and the winding tightness, it is difficult to make the large number of tabs to be stacked with small misalignment, which may reduce the effective connection between the stacked tabs and the electrode terminals; secondly, the winding circumference of the electrode sheet gradually decrease from an outer layer to an inner layer, and the spacing between two adjacent tabs close to the inner layer is relatively small, and the tabs are densely distributed, which causes greater difficulty in die-cutting the tabs, and it is difficult to ensure the precision of die-cutting the tabs; third, the weight of the electrode assembly is increased, thus increasing the weight of the battery cell. All of these problems may affect the performance of the battery cell.

Based on the findings of the above problems, in order to improve the performance of the battery cell, the inventor of this disclosure intends to improve the extraction manner of the tabs from the electrode assembly by improving the alignment of the tabs and reducing the difficulty in die-cutting the tabs. The first electrode sheet and the second electrode sheet both include a main body and at least one tab group, the first electrode sheet and the second electrode sheet are winded around a winding axis so that their respective main bodies overlap to form a winding body, and after the main bodies have been winded, a plurality of electrode sheet layers are formed along a radial direction of the winding body; the tab group includes a plurality of stacked tabs, and at least two adjacent tabs in the tab group are separated by at least one electrode sheet layer of same polarity in the radial direction. This type of electrode assembly may improve the alignment of the tabs, reduce the difficulty in die-cutting the tabs, and reduce the weight of the electrode assembly.

The battery cell in the embodiments of this disclosure is applicable to a battery and an electric device using the battery.

The electric device may be a mobile phone, a portable device, a laptop, a battery car, an electric vehicle, a ship, a spacecraft, an electronic toy and a power tool, etc. For example, a spacecraft includes an aircraft, a rocket, a space shuttle and a spaceship, etc., an electronic toy includes a stationary or a mobile electronic toy, e.g., a game console, an electronic car toy, an electronic ship toy and an electronic aircraft toy and etc., and a power tool includes an electric metal-cutting tool, an electric grinding tool, an electric assembling tool and a railway power tool, for example, an electric drill, an electric grinder, an electric wrench, an electric screwdriver, an electric hammer, an electric impact drill, a concrete vibrator and an electric plane.

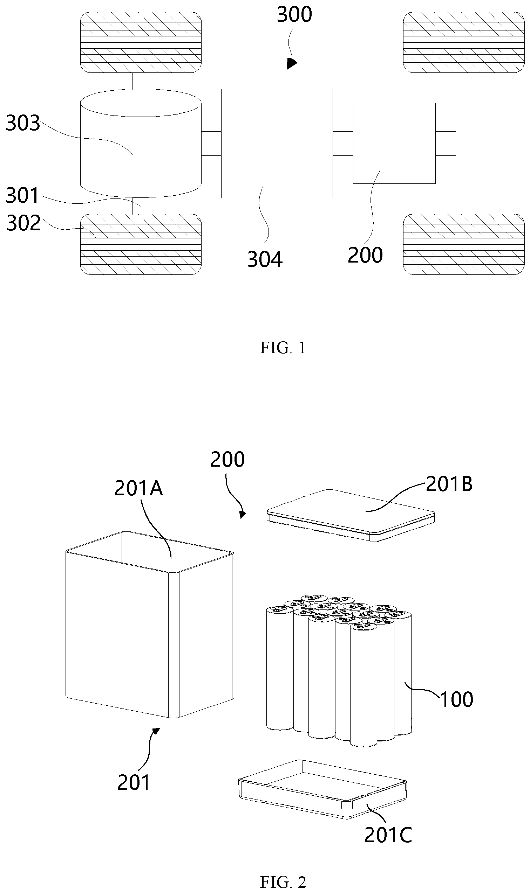

As shown in FIG. 1, the electric device may be a vehicle 300, such as a new energy vehicle, which may be a pure electric vehicle, a hybrid vehicle or an extended-range electric vehicle, etc.; or the electric device be a drone or a ship, etc. Specifically, the vehicle 300 may include a vehicle axle 301, a wheel 302 connected to the vehicle axle 301, a motor 303, a controller 304, and a battery 200. The motor 303 is used to drive the vehicle axle 301 to rotate, the controller 304 is used to control the motor 303 to operate, and the battery 200 may be arranged at the bottom, the head, or the rear of the vehicle 300, to supply electrical energy for the operation of the motor 303 and other components in the vehicle.

As shown in FIG. 2, the battery 200 includes a case 201 and a battery cell 100. There may be one or more battery cells 100 in the battery 200. If there are a plurality of battery cells 100, the plurality of battery cells 100 may be connected in series or in parallel or in parallel-series. The "battery cells 100 be connected in parallel-series" means that the battery cells 100 are connected in series and in parallel. It is possible that a plurality of battery cells 100 are connected first in series or in parallel or in parallel-series to form a battery module, then a plurality of battery modules are connected in series or in parallel or in parallel-series to form one piece to be accommodated in the case 201. It is also possible that all the battery cells 100 are directly connected in series or in parallel or in parallel-series, and then the piece formed by all the battery cells 100 is accommodated in the case 201.

The case 201 is hollow inside and is used to accommodate one or more battery cells 100. According to the shape, the number, the combination and other requirements of the accommodated battery cell(s)100, the case 201 may have different shapes and sizes. For example, the case 201 may include: an accommodation portion 201A, a first cover body 201B and a second cover body 201C. The two opposite ends of the accommodation portion 201A both have an opening, the first cover body 201B and the second cover body 201C are used to close the openings at the two ends of the accommodation portion 201A, respectively. The accommodation portion 201A is shaped as a rectangular container, according to the arrangement of the plurality of battery cells 100.

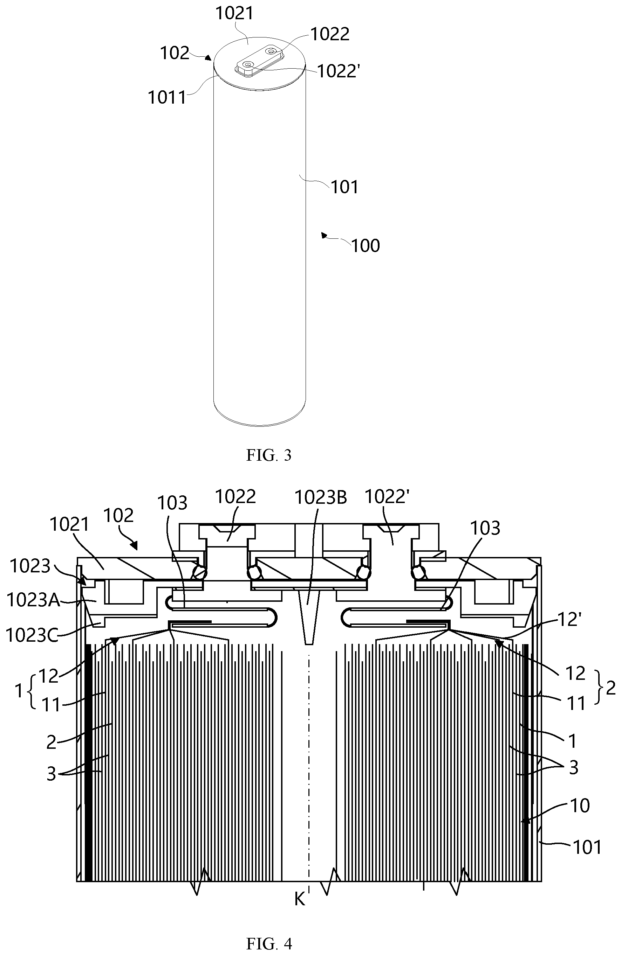

As shown in FIG. 3 and FIG. 4, the battery cell 100 includes a housing 101, an end cover assembly 102 and an electrode assembly 10. The battery cell 100 may be, for example, a lithium-ion secondary battery, a lithium-ion primary battery, a lithium-sulfur battery, a sodium-lithium-ion battery, or a magnesium-ion battery.

The housing 101 is a hollow structure for housing the electrode assembly 10, and has an opening 1011. The end cover assembly 102 is used to close the opening 1011. The end cover assembly 102 includes an end cover body 1021, a first electrode terminal 1022 and a second electrode terminal 1022', where the first electrode terminal 1022 and the second electrode terminal 1022' are provided on the end cover body 1021. The end cover body 1021 is used to cover the opening 1011.

The electrode assembly 10 is provided inside the housing 101. The electrode assembly 10 includes a first electrode sheet 1 and a second electrode sheet 2 of opposite polarities. The first electrode sheet 1 and the second electrode sheet 2 may be formed by winding around the winding axis K. And the first electrode sheet 1 and the second electrode sheet 2 of the electrode assembly 10 both include at least one tab group 12. The tab group 12 of the first electrode sheet 1 may include a plurality of the above-mentioned first tabs, and the tab group 12 of the second electrode sheet 2 may include a plurality of the above-mentioned second tabs. At least one tab group 12 of the first electrode sheet 1 is electrically connected to the first electrode terminal 1022, and at least one tab group 12 of the second electrode sheet 2 is electrically connected to the second electrode terminal 1022'.

As shown in FIG. 4, the respective tab groups 12 of the first electrode sheet 1 and the second electrode sheet 2 may be located at a same end of the electrode assembly 10 along the winding axis K, the end cover assembly 102 is accordingly arranged at one end of the housing 101, and the first electrode terminal 1022 and the second electrode terminal 1022' are provided on the same end cover body 1021, which may decrease the size of the battery cell 100 along the winding axis K and increase the overall energy density of the battery cell 100. Alternatively, the respective tab groups 12 of the first electrode sheet 1 and the second electrode sheet 2 are respectively provided at the two ends of the electrode assembly 10 along the winding axis K, the end cover assemblies 102 are accordingly arranged at the two ends of the housing 101 respectively, and the first electrode terminal 1022 and the second electrode terminal 1022' are respectively provided on the end cover bodies 1021 at the two ends.

Alternatively, at least one tab group 12 of the first electrode sheet 1 is electrically connected to the first electrode terminal 1022, and at least one tab group 12 of the second electrode sheet 2 is electrically connected to the end cover body 1021. To facilitate the connection, at least one tab group 12 of the second electrode sheet 2 is electrically connected to the end cover body 1021 at the same end.

In some embodiments, as shown in FIG. 4, the battery cell 100 further includes two adaptors 103. At least one tab group 12 of the first electrode sheet 1 is electrically connected to the first electrode terminal 1022 through one adaptor 103, and at least one tab group 12 of the second electrode sheet 2 is electrically connected to the end cover body 1021 or to the second electrode terminal 1022' through the other adaptor 103.

Considering that the plurality of tabs 12' in the tab group 12 are loose, and it is difficult to connect them directly to the electrode terminal, this embodiment realizes an electrical connection between the tab group 12' and the electrode terminal through the adaptors 103, which may improve the connection reliability between the tab group 12 and the electrode terminal, and may facilitate a reliably transmission of the electric energy output by the tabs 12' to the electrode terminal, and reduce the difficulty in the connection process.

In some embodiments, the end cover assembly 102 further includes an insulator 1023, which may be made of, for example, plastic or other materials. The insulator 1023 includes an insulator body 1023A and a first projector 1023B, where the insulator body 1023A is arranged between the end cover body 1021 and the electrode assembly 10 along the winding axis K. The first projector 1023B is connected to the insulator body 1023A and protrudes towards the electrode assembly 10. One adaptor 103 and at least one tab group 12 connected thereto are located at one side of the first projector 1023B, and the other adaptor 103 and at least one tab group 12 connected thereto are located at the other side of the first projector 1023B.

For a cylindrical battery cell 100, the insulator body 1023A may be shaped as a disk, and grooves or projectors may be provided thereon according to the need. Because the tab groups 12 of the first electrode sheet 1 and of the second electrode sheet 2 are spaced along the circumference of the winding body S, it is possible that the first projector 1023B is provided in a space region and extends along a diameter of the insulator body 1023A. The first projector 1023B may be rectangular, trapezoidal, triangular and so on in the longitudinal section of the battery cell 100. The insulator 1023 may further include a second rejector 1023C, which is connected to the insulator body 1023A and protrudes towards the electrode assembly 10. The second projector 1023C is located at the insulator body 1023A at the position near the outer end along the radial direction, to avoid short circuit between the housing 101 and the tab group 12. The second projector 1023C may extend only along part of the circumference at the position where the tab group 12 is arranged, or may extend along the entire circumference.

For the structure where the tab groups 12 of the first electrode sheet 1 and of the second electrode sheet 2 are extracted from same end of the winding body S, the embodiment may physically isolate the tab groups 12 of opposite polarities through the first projector 1023B, so as to avoid short circuit resulted from vibration during assembling or in use, and to ensure insulation between the tab groups 12 of the first electrode sheet 1 and of the second electrode sheet 2 and improve the operation reliability of the battery cell 100.

The structure of the electrode assembly 10 is described in detail below.

In some embodiments, as shown in FIG. 4, the electrode assembly 10 includes: the first electrode sheet 1 and the second electrode sheet 2 of opposite polarities, where both the first electrode sheet 1 and the second electrode sheet 2 both include a main body 11 and at least one tab group 12, the first electrode sheet 1 and the second electrode sheet 2 are winded around the winding axis K so that their respective main bodies 11 overlap to form the winding body S, and after the main bodies 11 have been winded, a plurality of electrode sheet layers 111 are formed along the radial direction of the winding body S. In this case, the tab group 12 includes a plurality of stacked tabs 12', which protrude from the main body 11, and at least two adjacent tabs 12' in the tab group 12 are separated by at least one electrode sheet layer 111 of same polarity in the radial direction.

In this case, the first electrode sheet 1 and the second electrode sheet 2 have basically same shape, which may be a long strip. The first electrode sheet 1 and the second electrode sheet 2 are arranged to overlap along a direction perpendicular to the winding axis K and form the winding body S which may be in shape of a cylinder, a flat body, a cuboid or other shapes. For example, the first electrode sheet 1 is an anode electrode sheet and the second electrode sheet 2 is a cathode electrode sheet; or the first electrode sheet 1 is a cathode electrode sheet and the second electrode sheet 2 is an anode electrode sheet. The electrode assembly 10 further includes a separator 3, which is used to separate the first electrode sheet 1 and the second electrode sheet 2. The separator 3, the main body 11 of the first electrode sheet 1 and the main body of the second electrode sheet 2 are winded to form the winding body S.

After the main body 11 of the first electrode sheet 1 has been winded, a plurality of electrode sheet layers 111 are formed along the radial direction of the winding body S; and after the main body 11 of the second electrode sheet 2 has been winded, a plurality of electrode layers 111 also formed along the radial direction of the winding body S. The electrode sheet layers 111 of the first electrode sheet 1 are alternated with the electrode sheet layers 111 of the second electrode sheet 2 along the radial direction, and all the electrode sheet layers 111 of the first electrode sheet 1 and all the electrode sheet layers of the second electrode sheet 2 together form the winding body S.

Both the first electrode sheet 1 and the second electrode sheet 2 may be provided with one tab group 12. The respective tab groups 12 of the first electrode sheet 1 and of the second electrode sheet 2 are spaced along the circumference of the winding body S to avoid short circuit. Moreover, since no tab is provided in the space region, the space region may be used as a liquid guiding area through which the electrolyte may infiltrate into the winding body S, so that the electrolyte is allowed to fully react with the active materials on the first electrode sheet 1 and on the second electrode sheet 2 during charging and discharging of the battery. Alternatively, at least one of the first electrode sheet 1 and the second electrode sheet 2 may be provided with a plurality of tab groups 12.

The tab group 12 includes a plurality of stacked tabs 12', which protrude from the main body 11 along the winding axis K. "Stacked tabs 12‴ means that a plurality of tabs 12' in same tab group 12 are arranged in same radial distribution of the winding structure S, that is, projections of the plurality of tabs 12' along the radial direction overlap with each other. The cases where the sides of the plurality of tabs 12' are aligned or offset along the winding direction are all within the scope of protection of this disclosure.

For at least one of the first electrode sheet 1 and the second electrode sheet 2, at least two adjacent tabs 12' in the tab group 12 are separated by at least one electrode sheet layer 111 of same polarity in the radial direction. For example, only one set of two adjacent tabs 12' in the tab group 12 has the two adjacent tabs 12' separated by at least one electrode sheet layer 111 of same polarity, or multiple sets of two adjacent tabs 12' in the tab group 12 have the two adjacent tabs 12' separated by at least one electrode sheet layer 111 of same polarity. In other words, at least one of the first electrode sheet 1 and the second electrode sheet 2 only has the tabs 12' extracted from part of the electrode sheet layers 111 to form the tab group 12, rather than from all the electrode sheet layers 111. In addition, the two adjacent tabs 12' may be separated by more than one, for example, more than five, electrode sheet layers 111 of same polarity.

The embodiment reduces the number of the tabs 12' extracted from one same electrode sheet of the electrode assembly 10, reduces the difficulty in die-cutting the tabs, and may also improve the alignment of the plurality of tabs 12' in the tab group 12 after winding, facilitate controlling the misalignment in a small range, thus increase the effective connection between the tab group 12 and the electrode terminal. Moreover, this structure may allow arranging relatively sparse tabs 12' at the winded inner circles, so as to reduce the difficulty in die-cutting the tabs, improve the size and position accuracy of the tabs 12'. In addition, this extraction manner of the tabs may reduce the weight of the electrode assembly 10, thereby reduce the weight of the battery cell 100. All of the above advantages may improve the performance of the battery cell 100.

In some embodiments, as shown in FIG. 4, the respective tab groups 12 of the first electrode sheet 1 and of the second electrode sheet 2 are extracted from one same end of the winding body S along the winding axis K.

This embodiment has the respective tab groups 12 of the first electrode sheet 1 and of the second electrode sheet 2 extracted from one same end of the winding body S. Space only needs to be reserved at one end of the electrode assembly 10 for electrical connection, and there is no need to provide the respective electrode terminals at both ends of the battery cell 100, which may effectively improve the overall energy density of the battery cell 100. Under the condition that the capacity of the battery cell 100 is certain, this may reduce the volume of the battery cell 100, so that the battery 200 may be more easily arranged in the electric device.

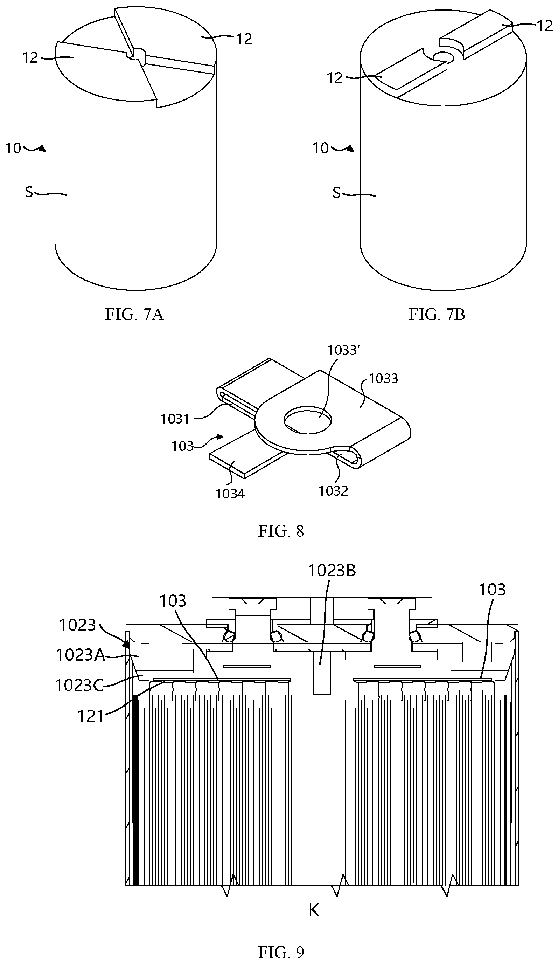

For example, the tab group 12 of the first electrode sheet 1 is electrically connected to the first electrode terminal 1022 through one adaptor 103, and the tab group 12 of the second electrode sheet 2 is electrically connected to the second electrode terminal 1022' through the other adaptor 103. As shown in FIG. 8, the adaptor 103 is formed by a bent sheet structure and composed of three sections, which also occupies a certain space along the winding axis K. Therefore, by extracting the respective tab groups 12 of the first electrode sheet 1 and of the second electrode sheet 2 from one same end of the winding body S, the height occupied by one electrode terminal, one adaptor 103 and one tab group 12 in the direction of the winding axis K may be omitted, which may greatly improve the overall energy density of the battery cell 100.

Alternatively, the respective tab groups 12 of the first electrode sheet 1 and of the second electrode sheet 2 may also be respectively extracted from the two ends of the winding body S along the winding axis K.

In some embodiments, every two adjacent tabs 12' in the tab group 12 are spaced along the winding direction. Since the tab groups 12 of the first electrode sheet 1 and of the second electrode sheet 2 are spaced along the circumference of the winding structure S to allow the tab groups 12 to extend along part of the circumference of the winding structure S, every two adjacent tabs 12' in the tab group 12 are discretely arranged at the main body 11 along the winding direction.

The arrangement of the tabs 12' in this embodiment allows the tab group 12 to extend along only part of the circumference of the winding structure S after winding, so as to allow the tab groups 12 of the first electrode sheet 1 and of the second electrode sheet 2 to be spaced along the circumference of the winding structure S, which may not only separate the different tab groups 12 spatially, but also enable the electrolyte to infiltrate into the inner of the winding body S through the space regions, such that the electrolyte may fully react with the active materials on the first electrode sheet 1 and on the second electrode sheet 2 during charging and discharging of the battery.

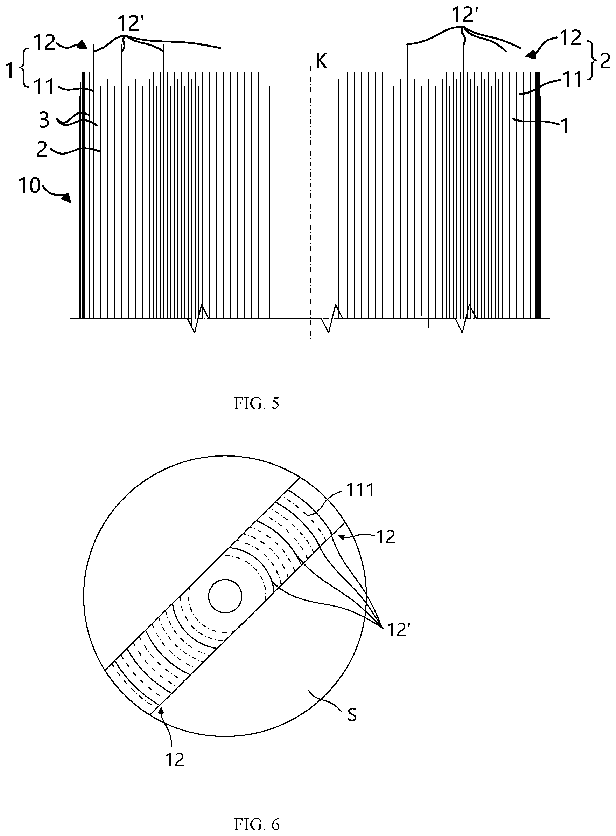

In some embodiments, as shown in FIGS. 5 and 6, the numbers of the electrode sheet layers 111 between every two adjacent tabs 12' in the tab group 12 gradually decrease from the inside to the outside.

The solid lines of the arcs in FIG. 6 represent the extracted tabs 12', and the dashed lines of the arcs represent the electrode sheet layers 111 without extracted tabs 12'. "From inside to outside" is in relation to the radial direction of the winding body S, "gradual decrease" includes the cases where the numbers of the electrode sheet layers 111 decrease as an isomeric sequence. For example, from inside to outside, the numbers of electrode sheet layers 111 of the same polarity between every two adjacent tabs 12' are: 4 layers, 3 layers, 2 layers, 1 layer from inside to outside. Where the electrode sheet layers 111 in the innermost region is not fully shown. Alternatively, "gradual decrease" also includes cases where the numbers of the electrode sheet layers 111 decrease as other sequence.

This embodiment has taken into account the gradual decrease of the winding circumference of the electrode sheet from an outer layer to an inner layer. The spacing between two adjacent tabs near the inner layer is relatively small and the tabs are dense. In case where each electrode sheet layer 111 has a tab 12' extracted, the spacing between two adjacent tabs 12' is small and the tab group 12 has excess overcurrent capacity at a radial inner region, which causes greater difficulty in die-cutting the tabs. It is difficult to ensure the precision of die-cutting the tabs, and it is difficult to control the misalignment of the plurality of tabs 12' in the tab group 12.

This extraction manner of tabs 12' allows the plurality of tabs 12' in the tab group 12 to be provided along the radial direction in an increasing density from inside to outside. On the basis of reduction of the number of the tabs12', it is possible to balance the distance between two adjacent tabs12' from an inner circle and an outer circle according to the distribution characteristics of the tabs 12' from an inner layer to an outer layer, so that the tabs 12' at the inner layer are sparser. This may effectively reduce the difficulty in die-cutting the tabs while ensuring the overcurrent capacity, and improve the precision of die-cutting the tabs, and facilitate controlling the misalignment of the plurality of tabs 12' in the tab group 12 in a small range after winding. In addition, this may also effectively reduce the weight of the electrode assembly 10.

In some embodiments, one electrode assembly 12 is provided, and the spacings between every two adjacent tabs 12' in the tab group 12 are consistent along the winding direction.

"Consistent" here includes the cases where the spacings between every two adjacent tabs 12' are equal along the winding direction, and includes the cases where the spacings are adjusted within a preset range so as to ensure the alignment of the plurality of stacked tabs 12'. Accordingly, the spacings between every two adjacent tabs 12' in the tab group 12 are consistent along the length of the electrode sheets when the first electrode sheet 1 and the second electrode sheet 2 are unwound.

On the basis of allowing the plurality of tabs 12' of the tab group 12 to be stacked, this embodiment may reduce the number of tabs 12' while reducing the difficulty in die-cutting by designing to keep the adjacent tabs 12' in the tab group 12 to be equally spaced. The die-cutting may be performed by only using cutters of same size, improving the production efficiency of the electrode assembly 10.

In some embodiments, as shown in FIG. 7A, the widths of the plurality of tabs 12' in the tab group 12 gradually increases along the winding direction from inside to outside, making the tab group 12 to be in shape of a fan.

This embodiment allows the widths of the plurality of tabs 12' in the tab group 12 to gradually increase along the radial direction from inside to outside. On the basis that every two adjacent tabs 12' are equally spaced, this embodiment may increase the effective contact area of the tab group 12 with the electrode terminal when connected to the electrode terminal by increasing the widths of the tabs 12' along the winding direction in a region of the outer layer, and may increase the overcurrent capacity, and thereby improve the performance of the battery cell 100.

In some embodiments, as shown in FIG. 7B, the widths of the plurality of tabs 12' in the tab group 12 along the winding direction are equal.

The tab group 12 has a structure resembling a rectangle, except that the two radially opposite sides of the rectangular structure are in shape of circular arcs. The same side ends of the plurality of tabs 12' in the tab group 12 are aligned to improve the effective contact area of the tab group 12 when electrically connected to the electrode terminal, and improve the overcurrent capacity. Alternatively, the cases where same side ends of the plurality of tabs 12' in the tab group 12 are offset along the winding direction is also within the protection scope of this scheme.

This embodiment allows the widths of the plurality of tabs 12' in the tab group 12 to be equal, which may reduce the difficulty in die-cutting the tabs, facilitate ensuring the size of the tabs 12', facilitate ensuring the alignment of the plurality of tabs 12' during winding, so as to reduce the technological difficulty in preparing the electrode assembly 10.

In some embodiments, as shown in FIG. 7A and FIG. 7B, the respective tab groups 12 of the first electrode sheet 1 and of the second electrode sheet 2 are symmetrically arranged with respect to the winding axis K. Where the "symmetrically arranged" includes cases where the respective tab groups 12 of the first electrode sheet 1 and of the second electrode sheet 2 have same shape and are positioned to be centrosymmetric with respect to the winding axis K.

The embodiment allows the first electrode sheet 1 and the second electrode sheet 2 to have same overcurrent capacity, and facilitates increasing the circumferential size of the tab group 12, which may improve the overcurrent capacity of the battery cell 100, and improve the spatial separation between the tab groups 12 of the first electrode sheet 1 and of the second electrode sheet 2 to avoid short circuit. Moreover, for the structure shown in FIG. 4, the tab group 12 of the first electrode sheet 1 is electrically connected to the first electrode terminal 1022 through an adaptor 103, and the tab group 12 of the second electrode sheet 2 is electrically connected to the second electrode terminal 1022' through another adaptor 103. The symmetrical arrangement of the respective tab groups 12 of the first electrode sheet 1 and of the second electrode sheet 2 provides space for arranging the two adaptors 103, which may avoid short circuit resulted from a too close circumferential range between the two adaptors 103, and the first electrode terminal 1022 and the second electrode terminal 1022' may also be symmetrically arranged with respect to the winding axis K.

In some embodiments, the free ends of the plurality of tabs 12' in each tab group 12 are drawn together and connected to the adaptor 103.

After drawn together, the free ends of the plurality of tabs 12' may be first connected together, for example by welding, then a length of the plurality of connected tabs 12' is connected to the adaptor 103, and finally the adaptor 103 is bent to facilitate the connection of the electrode terminals. Since the distances between the plurality of tabs 12' and the position where the tabs are drawn together are different, the lengths of the plurality of tabs 12' may be set to different lengths to facilitate the connection of the plurality of tab 12'. For the electrode assembly 10 where the numbers of the electrode sheet layers 111 between every two adjacent tabs 12' are gradually reduced from inside to outside, because the plurality of tabs 12' are not evenly distributed in the radial direction, this manner allows connecting the plurality of tabs12' together with a simpler process, which may reduce the requirement on the positioning accuracy of the ends of the tabs12' during connection.

The adaptor 103 adopts a sheet structure, which is bent after connecting with the tab group 12, and the number of bends is greater than two. As shown in FIG. 8, there are a first section1031, a second section 1032 and a third section 1033, which are arranged in parallel in the direction of the winding axis K. A first end of the second section 1032 is connected with the first section 1031, and a second end of the second section 1032 is connected with the third section 1033. The third section 1033 is provided with a connecting hole 1033' for connecting with the first electrode terminal 1022 or the second electrode terminal 1022'. A side of the first section 1031 may be connected with an extension section 1034 for electrical connection with the tab group 12. A length of the plurality connected tabs 12' is electrically connected with the extension section 1034 and bent to the side of extension section 1034 away from the electrode assembly 10 to prevent the battery cell 100 from having the tabs 12' inserted into the winding body S when subjected to vibration, improving the safety in use of the battery cell 100.

The connection between the tab group 12 and the adaptor 103 in this embodiment may omit a process of flattening the tabs by directly connecting the plurality of tabs 12' together to be connected with the adaptor 103, which may simplify the assembly of the battery cell 100, and reduce the requirement on the positioning accuracy of the ends of the tabs 12' when connecting the tab group 12 and the adaptor 103, thus improving the production efficiency of the battery cell 100.

In some embodiments, as shown in FIG. 9, the numbers of the electrode sheet layers 111 between every two adjacent tabs 12' in the tab group 12 are equal.

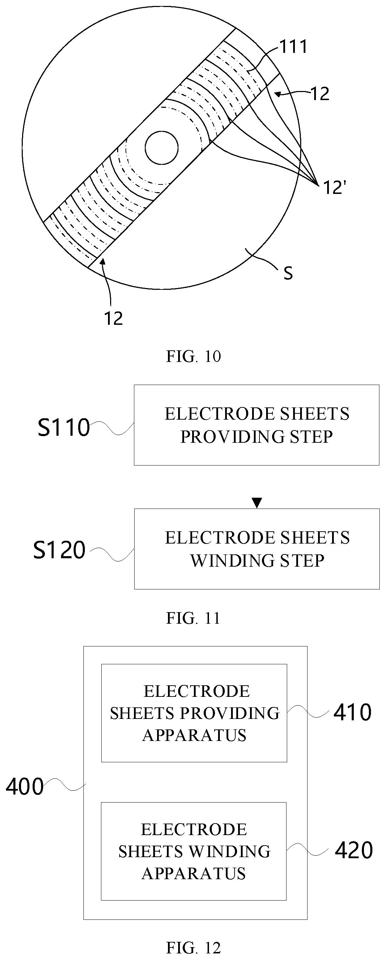

The solid lines of the arcs in FIG. 10 represent the extracted tabs 12', and the dashed lines of the arcs represent the electrode sheet layers without extracted tabs 12'. For example, the numbers of the electrode sheet layers 111 between every two adjacent tabs 12' may be 1 layer, 2 layers, 3 layers, or more layers.

This embodiment allows the plurality of tabs 12' in the tab group 12 to be evenly distributed in the radial direction, so as to make it easier to extract electric energy provided by the plurality of tabs 12' in the tab group 12. For example, if the tab group 12 is electrically connected to the electrode terminal through the adaptor 103 by welding, it is easier to control the welding paths of the adaptor 103 and the tab group 12, and ensure the electric connection effect of the tab group 12 and the adaptor 103, improving the operational reliability of the battery cell 100.

In some embodiments, each of the free ends of the plurality of tabs 12' in each tab group 12 is flattened to form a connecting portion 121, and the respective connecting portions 121 of the plurality of tabs 12' are all connected to the adaptor 103.

In this case, "flattening" is a process where a processing equipment applies external force on the tabs 12' along the circumference of the winding body S, so that the tabs 12' are bent and deformed, to make two adjacent tabs 12' closer along the radial direction, so as to facilitate the connection between the tab group 12 and the adaptor 103 or the electrode terminal.

For the electrode assembly 10 where the numbers of the electrode sheet layers 111 between every two adjacent tabs 12' in the tab group 12 are equal, the plurality of tabs 12' in the tab group 12 are evenly distributed along the radial direction. The flattering process may make the plurality of tabs 12' to form connecting portions 121 with the same length as a welding plane and to be connected to the adaptor 103 through the respective connecting portions 121 of the plurality of tabs 12'.

This embodiment forms the connecting portions 121 by flattening the free ends of the plurality of tabs 12' in the tab group 12 and connecting them to the adaptor 103 through the plurality of connecting portions 121, thus increasing the radial length of the adaptor 103 electrically connected with the tab group 12. When the connection is realized by welding, it is easy to make the welding paths cover all the tabs 12' in the tab group 12, thus improving the reliability of welding and improving the performance of battery cell 100.

Two specific embodiments of the battery cell 100 are given below.

In some embodiments, as shown in FIGS. 4 to 8, the battery cell 100 includes a housing 101, an end cover assembly 102, and an electrode assembly 10. The housing 101 has an opening 1011, the end cover assembly 102 is used to close the opening 1011, the end cover assembly 102 includes an end cover body 1021, a first electrode terminal 1022 and a second electrode terminal 1022', the first electrode terminal 1022 and the second electrode terminal 1022' are provided on the end cover body 1021, and the end cover body 1021 is used to cover the opening 1011. For example, the battery cell 100 may be in shape of cylinder.

The electrode assembly 10 is provided inside the housing 101. The electrode assembly 10 includes a first electrode sheet 1 and a second electrode sheet 2 of opposite polarities. The first electrode sheet 1 and the second electrode sheet 2 may be formed by winding around a winding axis K. And the first electrode sheet 1 and the second electrode sheet 2 of the electrode assembly 10 both include a main body 11 and a tab group 12. For example, in order to reduce the number of the tabs, it is possible to provide one tab group 12, and the tab group 12 of the first electrode sheet 1 is electrically connected with the first electrode terminal 1022 through one adaptor 103 and the tab group 12 of the second electrode sheet 2 is electrically connected with the second electrode terminal 1022' through the other adaptor 103. The respective tab groups 12 of the first electrode sheet 1 and of the second electrode sheet 2 may be located at a same end of the electrode assembly 10 along the winding axis K. Accordingly, the end cover assembly 102 is provided at one end of the housing 101, and the first electrode terminal 1022 and the second electrode terminal 1022' are provided on the same end cover body 1021.

The first electrode sheet 1 and the second electrode sheet 2 are winded around the winding axis K so that their respective main bodies 11 overlap to form a winding body S, and after the main bodies 11 have been winded, a plurality of electrode sheet layers 111 are formed along a radial direction of the winding body S. In this case, the tab group 12 includes a plurality of stacked tabs 12', at least two adjacent tabs 12' in the tab group 12 are separated by at least one electrode sheet layer 111 of same polarity in the radial direction, and the numbers of the electrode sheet layers 111 between every two adjacent tabs 12' in the tab group 12 gradually decrease from inside to outside.

In such extraction manner of the tabs 12', the free ends of the plurality of tabs 12' in each tab group 12 are drawn together, and a length of the plurality of connecting tabs 12' is connected with the adaptor 103, and then the adaptor 103 is bent to facilitate the connection of the electrode terminal. The position where the tabs are drawn together may be located in a middle region in the radial direction, in order to take into account the connection of the tabs 12' at the inner and outer layers. The structure of the bent adaptor 103 is shown in FIG 8, and the specific structure has been described above.

In some other embodiments, as shown in FIG. 9, the difference of the embodiments shown in FIG. 4 from those shown in FIG. 8 lies in that the numbers of the electrode sheet layers 111 between every two adjacent tabs 12' in the tab group 12 are equal. For example, the number of the spacing electrode sheet layers 111 is 2 or others. Each of the free ends of the plurality of tabs 12' in each tab group 12 is flattened to form a connecting portion 121. A plurality of connecting portions 121 form a welding plane. The respective connecting portions 121 of the plurality of tabs 12' are connected to the adaptor 103, for example, by welding.

Secondly, this disclosure provides a manufacturing method of electrode assembly 10. In some embodiments, as shown in FIG. 11, the manufacturing method includes:
At S110, which is an electrode sheets providing step, provide a first electrode sheet 1 and a second electrode sheet 2 of opposite polarities, where both the first electrode sheet 1 and the second electrode sheet 2 include a main body 11 and at least one tab group 12;
At S120, which is an electrode sheets winding step, wind the first electrode sheet 1 and the second electrode sheet 2 around a winding axis K so that their respective main bodies 11 overlap to form a winding body S, and after the main bodies 11 have been winded, a plurality of electrode sheet layers 111 are formed along a radial direction of the winding body S, the tab group 12 includes a plurality of stacked tabs 12', which protrude from the main body 11, and at least two adjacent tabs 12' in the tab group 12 are separated by at least one electrode sheet layer 111 of same polarity in the radial direction.

In this case, S110 and S120 are executed sequentially.

The embodiment reduces the number of the tabs 12' extracted from one same electrode sheet of the electrode assembly 10, reduces the difficulty in die-cutting the tabs, and may also improve the alignment of the plurality of tabs 12' in the tab group 12 after winding, facilitate controlling the misalignment in a small range, thus increase the effective connection between the tab group 12 and the electrode terminal. Moreover, this structure may allow arranging relatively sparse tabs 12' at the winded inner circles, so as to reduce the difficulty in die-cutting the tabs, improve the size and position accuracy of the tabs 12'. In addition, this extraction manner of the tabs may reduce the weight of the electrode assembly 10, thereby reduce the weight of the battery cell 100.

Finally, this disclosure provides a manufacturing device 400 of electrode assembly 10. In some embodiments, as shown in FIG. 12, the manufacturing device 400 includes an electrode sheets providing apparatus 410 and an electrode sheets winding apparatus 420.

The electrode sheets providing apparatus 410 is configured to provide a first electrode sheet 1 and a second electrode sheet 2 of opposite polarities, where both the first electrode sheet 1 and the second electrode sheet 2 include a main 11 and at least one tab group 12; and
The electrode sheets winding apparatus 420 is configured to wind the first electrode sheet 1 and the second electrode sheet 2 around a winding axis K so that their respective main bodies 11 overlap to form a winding body S, and after the main bodies 11 have been winded, a plurality of electrode sheet layers 111 are formed along a radial direction of the winding body S, the tab group 12 includes a plurality of stacked tabs 12, which protrude from the main body 11, and at least two adjacent tabs 12' in the tab group 12 are separated by at least one electrode sheet layer 111 of same polarity in the radial direction.

Although this invention has been described with reference to the preferred embodiments, it is possible to modify in various ways and replace component therein with equivalents without departing from the scope of this disclosure. In particular, the technical features referred to in the various embodiments may be combined in any manner, provided that there is no structural conflict. This disclosure is not limited to the specific embodiments disclosed herein, but covers all technical solutions falling within the scope of the claims.

## Claims

1. An electrode assembly (10) for a battery cell (100), comprising:
a first electrode sheet (1) and a second electrode sheet (2) of opposite polarities, wherein the first electrode sheet (1) and the second electrode sheet (2) both comprise a main body (11) and at least one tab group (12), the first electrode sheet (1) and the second electrode sheet (2) are winded around a winding axis (K) such that their respective main bodies (11) overlap to form a winding body (S), and after the main bodies (11) have been winded a plurality of electrode sheet layers (111) are formed along a radial direction of the winding main body (S);
wherein, the tab group (12) comprises a plurality of stacked tabs (12') which protrude from the main body (11), and at least two adjacent tabs (12') in the tab group (12) are separated by at least one electrode sheet layer (111) of same polarity in the radial direction.

2. The electrode assembly (10) according to claim 1, wherein every two adjacent tabs (12') in the tab group (12) are spaced along a winding direction.

3. The electrode assembly (10) according to claim 2, wherein the numbers of the electrode sheet layers (111) between every two adjacent tabs (12') in the tab group (12) gradually decrease from inside to outside or the numbers of the electrode sheet layers (111) between every two adjacent tabs (12') in the tab group (12) are equal.

4. The electrode assembly (10) according to any one of claims 1-3, wherein one tab group (12) is provided, and spacings between every two adjacent tabs (12') in the tab group (12) are equal along a winding direction.

5. The electrode assembly (10) according to any one of claims 1-4, wherein widths of the plurality of tabs (12') in the tab group (12) gradually increase in a winding direction from inside to outside, such that the tab group (12) is in a shape of a fan.

6. The electrode assembly (10) according to any one of claims 1-4, wherein widths of the plurality of tabs (12') in the tab group (12) are equal in a winding direction.

7. The electrode assembly (10) according to any one of claims 1-6, wherein the respective tab groups (12) of the first electrode sheet (1) and of the second electrode sheet (2) are extracted from a same end of the winding body (S) along the winding axis (K); optionally the respective tab groups (12) of the first electrode sheet (1) and of the second electrode sheet (2) are symmetrically arranged with respect to the winding axis (K).

8. A battery cell (100), comprising:
a housing (101) having an opening (1011);
an end cover assembly (102) for closing the opening (1011), wherein the end cover assembly (102) comprises an end cover body (1021) and a first electrode terminal (1022), the end cover body (1021) is for covering the opening (1011), and the first electrode terminal (1022) is provided at the end cover body (1021); and
the electrode assembly (10) according to any one of claims 1-7 provided inside the housing (101), wherein the at least one tab group (12) of the first electrode sheet (1) is electrically connected with the first electrode terminal (1022), and the at least one tab group (12) of the second electrode sheet (2) is electrically connected with the end cover body (1021) or to a second electrode terminal (1022') provided on the end cover body (1021).

9. The battery cell (100) according to claim 8, further comprising two adaptors (103), wherein the at least one tab group (12) of the first electrode sheet (1) is electrically connected with the first electrode terminal (1022) through one of the adaptors (103), and the at least one tab group (12) of the second electrode sheet (2) is electrically connected with the end cover body (1021) or with the second electrode terminal (1022') through other of the adaptors (103).

10. The battery cell (100) according to claim 9, wherein the end cover assembly (102) further comprises an insulator (1023), the insulator (1023) comprises an insulator body (1023A) and a first projector (1023B), the insulator body (1023A) is arranged between the end cover body (1021) and the electrode assembly (10), the first projector (1023B) is connected to the insulator body (1023A) and protrudes towards the electrode assembly (10), one of the adaptors (103) and at least one tab group (12) connected thereto are located at one side of the first projector (1023B), and other of the adaptors (103) and at least one tab group (12) connected thereto are located at other side of the first projector (1023B).

11. The battery cell (100) according to claim 9 or 10, wherein free ends of the plurality of tabs (12') in each of the tab groups (12) are drawn together and connected to the adaptors (103); or free ends of the plurality of tabs (12') in each of the tab groups (12) are flattened to form connecting portions (121), and the respective connecting portions (121) of the plurality of tabs (12') are connected to the adaptors (103).

12. A battery (200), comprising:
the battery cell (100) according to any one of claims 8-11; and
a case (201) for accommodating the battery cell (100).

13. An electronic device comprising the battery (200) according to claim 12, wherein the battery (200) is for supplying electrical energy for the electronic device.

14. A manufacturing method of electrode assembly (10), comprising:
an electrode sheets providing step, comprising: providing a first electrode sheet (1) and a second electrode sheet (2) of opposite polarities, wherein both the first electrode sheet (1) and the second electrode sheet (2) include a main body (11) and at least one tab group (12); and
an electrode sheets winding step, comprising: winding the first electrode sheet (1) and the second electrode sheet (2) around a winding axis (K), such that their respective main bodies (11) overlap to form a winding body (S), and after the main bodies (11) have been winded, a plurality of electrode sheet layers (111) are formed along a radial direction of the winding body (S), the tab group (12) includes a plurality of stacked tabs (12'), which protrude from the main body (11), and at least two adjacent tabs (12') in the tab group (12) are separated by at least one electrode sheet layer (111) of same polarity in the radial direction.

15. A manufacturing device (400) of electrode assembly (10), comprising:
an electrode sheets providing apparatus (410) configured to provide a first electrode sheet (1) and a second electrode sheet (2) of opposite polarities, wherein both the first electrode sheet (1) and the second electrode sheet (2) include a main body (11) and at least one tab group (12); and
an electrode sheets winding apparatus (420) configured to wind the first electrode sheet (1) and the second electrode sheet (2) around a winding axis (K), such that their respective main bodies (11) overlap to form a winding body (S), and after the main bodies (11) have been winded, a plurality of electrode sheet layers (111) are formed along a radial direction of the winding body (S), the tab group (12) includes a plurality of stacked tabs (12'), which protrude from the main body (11), and at least two adjacent tabs (12') in the tab group (12) are separated by at least one electrode sheet layer (111) of same polarity in the radial direction.
